# EUROPEAN PATENT SPECIFICATION

(11) **EP 2 753 162 B1**
(45) Date of publication and mention of the grant of the patent: **16.11.2016**
(21) Application number: 12759176.6
(22) Date of filing: 06.09.2012
(51) Int. Cl.: A01B 29/04

(54) **PACKER RING STRUCTURE**
VERPACKERRINGSTRUKTUR
STRUCTURE D'ANNEAUX DE GARNISSAGE

(30) Priority: 06.09.2011 GB 201115327
(43) Date of publication of application: 16.07.2014
(73) Proprietor: Sumo UK Limited, Redgates Melbourne, York YO42 4RG (GB)
(72) Inventor: WEALLEANS, Shaun, Yorkshire YO42 4RG (GB)
(74) Representative: Wilson, Peter
(86) International application number: PCT/GB2012/052182
(87) International publication number: WO 2013/034906

(56) References cited:
- WO-A1-2004/047515
- WO-A1-2006/056767
- DE-A1- 2 650 330

## Description

The invention relates to a press/ packer ring structure mountable on a press consolidator or packer roller for breaking down and consolidating a particulate substrate, such as a press cultivator used for breaking down and consolidating soil for cultivation. The invention further relates to a method of mounting a press/ packer ring structure onto a press consolidator, to a method of replacement of a packer ring structure on a press consolidator, and to a press consolidator having a plurality of such packer ring structures mounted thereon.

Press cultivators comprising one or more rollers are conventionally used for crumbling and consolidating ploughed ground prior to sowing with seed. Firming the soil profile after disturbance by plough or disc is beneficial as it makes subsequent trafficking and cultivation easier and more effective. The soil profile will accept water more effectively by improved capillary action and if conditions are dry, moisture is more likely to be retained.

In some circumstances with some soil types sufficient consolidation can be achieved by use of a simple roller alone. The roller is drawn across the ploughed ground surface. The weight of the roller serves to break up soil clods and to consolidate the surface to produce a seed bed. Such rollers may be fitted with radically projecting blades to reduce sticking ensuring bite even in inclement conditions and reducing bulldozing. However they primarily act merely by compressing the soil, which can be of limited effectiveness, and the excessively flattened surface can also be undesirable, for example in relation to drainage.

More typically press cultivators may therefore comprise one or more rows of packer or press rings which consolidate and slice the soil clods remaining from ploughing, enabling break down into a seed bed more easily via subsequent weathering effects.

Packer or press rings may be made of cast or steel rings co-axially mounted to be pulled behind a tractor for example. One or more rows of press rings may be mounted on a common trailer chassis to be pulled behind a tractor for example. Such a chassis may also incorporate structures having other functionality; for example rows of press rings may be mounted in train behind a primary or secondary cultivator or like machine.

Packer or press rings may be mounted on a simple axle. For other applications it may be preferable to provide a packer roller or press consolidator roller having annular ring structures on a generally cylindrical roller barrel which itself makes up a substantial part of the overall diameter of the resultant roller, and the surface of which may also have a consolidation role. International Patent Publication WO2004/047515 describes an example of a press consolidator for consolidation of a particulate substrate such as soil in which a generally cylindrical roller barrel is provided with axially spaced packer ring structures, each packer ring structure being an annular structure extending radially outward from the barrel.

This press consolidator meets a general need to consolidate effectively across the width of the press and across the entire surface of an area to be cultivated without excessively flattening or compacting the surface, and in particular can do so using a single roller.

It does so in that the packer ring/ roller barrel combination presents a row of radial blade formations projecting from the cylindrical barrel surface, the overall combination acting as a consolidation surface to fragment clods and consolidate the profile of the soil or other substrate, in particular leaving a corrugated ridge and trough surface profile which is weatherproof, wherein the ridges dry quickly and rain drains away through the troughs.

The press consolidator retains many of the advantages of simple barrel rollers, whilst at the same time surprisingly obtaining many of the apparently contradictory advantages of separate press rings. It gives a very evenly packed structure, consolidating across the full width of the roller. It retains a ridged structure to the consolidated surface with the benefits noted.

In such press consolidators, press rings have been fixed to the barrel by welding, this gives a reliable joint but has its drawbacks. In particular, over a few years the rings wear away and need replacing. This is a major engineering task as all the welds have to be cut off, then the barrel is cleaned up and new rings are welded on, this takes a huge amount of time and energy.

Document DE 26 50 330 discloses a press ring structure for mounting upon a barral of a press consolidator roller according to the preamble of claim 1.

It is an object of this invention to provide a more flexible means and method for mounting press rings to a barrel of such a press consolidator in particular preferably to make the press rings replaceable without the need for weld removal or re-welding.

In accordance with the invention in a first aspect, a press ring structure for mounting upon a barrel of a press consolidator roller comprises a plurality of annular segments mutually mechanically engagable such as to form when so engaged a complete annular press ring structure, and adapted to be mountable on a barrel of a press consolidator roller such as when so mounted to form a press ring thereon.

The invention is distinctly characterised in that a press ring is segmented into a number of annular segments, each of these effecting when assembled a simple mechanical engagement with adjacent segments. This facilitates the use of a simple mechanical mount to mount the press ring in place on the barrel. The assembled whole is adapted to be mountable on a barrel, preferably in that each annular segment is adapted to be mountable on a barrel, such that it can be releasably fixed into place, for example by a suitable lockable and releasable engagement mechanism provided in conjunction with the barrel/press ring assembly, so as to allow mounting and subsequent removal of press ring structures on the barrel.

The segments may be thus brought together and assembled about the surface of the barrel, into a fixed and mounted configuration where they form a rigid structure mechanically engaged to one another to form a complete annular whole.

Such an arrangement provides for the attachment and removal of individual press rings on a barrel, and in particular provides for a mechanical arrangement which can facilitate this without the need for a welding joint. A welding joint may no longer be necessary and is preferably dispensed with entirely. This provides a potentially more flexible method of mounting the press rings onto a barrel of a press consolidator, in particular one which is suitable to make the press rings replaceable without the need for weld removal and re-welding.

Suitable press ring structures which are formed by the plurality of annular segments of the invention when duly assembled will be familiar to those skilled in the art, and their precise configuration is not pertinent to the invention. A typical annular press ring structure comprises at least a radially projecting press ring formation which extends outwardly from and for example generally perpendicular to the surface of a barrel on which it is mounted, so as to create a furrow in a surface to be consolidated. Typically, as will be familiar, a press consolidator roller barrel will comprise a plurality of axially spaced press rings along at least a substantial part of its surface. Typically, a series of such press rings will be identical and evenly spaced for example. Such arrangements of press consolidator roller will be familiar to those skilled in the art.

In a simplest case the radially projecting press ring formation may comprise a radial blade formation, preferably annularly extending around the entire extent of the ring, and for example comprising an annular disc, projecting perpendicularly beyond the barrel surface when mounted in situ. Such a formation defines generally parallel outwardly presented surfaces for the press ring structure projecting perpendicularly beyond the barrel.

Such an annular disc or other radial blade formation is preferably provided with a circumferentially varying edge profile, for example being notched or serrated, to facilitate rotation even in the most inclement of conditions.

In a typical convenient varying edge profile, an annular disc or other radial blade formation extends beyond a barrel when mounted to a mean radial distance, but the edge profile is notched or serrated, for example according to a sequentially repeating pattern around the annular formation, by a varying amount either side of the mean radial distance. Typically, the annular disc formation will be notched or serrated by a varying amount either side of the mean radial distance that at its greatest extent is less than the total projecting distance between the barrel and the mean radial distance.

Additionally or alternatively to such a notch or serration, the radially projecting press ring formation may comprise one or more drive lug projections comprising portions of the annular disc or other radial blade formation which extend substantially beyond the mean radial distance of the radial blade formation, and for example for at least the same distance again as the total projecting distance between the barrel and the mean radial distance.

A press ring formation may be provided with one or more such drive lugs. For example, one, some or all of the annular segments may comprise one or more such drive lugs.

The purpose of such a drive lug is to create an extra drive to keep the assembled press consolidator roller turning in all soil types and conditions. Different numbers can be fitted for different conditions. In a possible embodiment, at least some annular segments may be interchangeably provided in two alternative forms, with and without such a drive lug, which may allow the conformation of the assembled press consolidator to be changed for different conditions.

Additionally or alternatively the radially projecting press ring formation may comprise a wedge formation tapering from a wider base at the barrel to a narrower distal portion to present a generally v-shaped projecting portion when mounted in situ, preferably annularly extending around the entire extent of the ring. Such a formation defines outwardly presented surfaces for the press ring structure that are generally v-shaped and tapered as it projects perpendicularly beyond the barrel.

The wedge formation is preferably defined by at least a pair of symmetrical opposed shoulder portions protruding radially from the roller barrel when in situ. Conveniently the outward surfaces are either planar or convex.

In a preferred embodiment the radially projecting press ring formation combines both structures, for example having a wedge formation proximal to the barrel and a disc formation extending outwardly beyond it.

In a particularly preferred embodiment, the radially projecting press ring formation preferably comprises three parts, these being a central ring protruding radially to the greatest extent and a pair of shoulder portions extending therefrom from opposing sides of the ring to the roller barrel surface when mounted in situ. Preferably the shoulders are of convex design.

The central ring preferably protrudes radially beyond the greatest radial extent of the shoulder portions, is preferably generally a circular annular disc, is preferably oriented generally perpendicular to the axis of the roller barrel when mounted in situ.

In accordance with the invention, an annular press ring is split into a number of annular segments, each of which is mechanically engagable with its neighbours so that the segments are assemblable into a complete annular press ring.

Preferably, a press ring comprises between three and six annular segments.

Conveniently, each press ring segment making up a press ring is identical.

The press ring segments making up a given press ring are provided with mutually co-operable mechanical engagement formations such that in an assembled state each end face of each annular segment abuts with an adjacent end face of an adjacent annular segment in mechanically engaged manner. For example, complementary first and second engagement formations are provided in association with and for example in or on the adjacent end faces of each pair of abutting annular segments. For example, complementary projections and recesses may be provide on or in such adjacent end faces.

In a convenient embodiment, the first and second end faces of each annular segment of a press ring are respectively provided with identical first and second engagement formations, such that in a complete assembled press ring a first engagement formation of a first face of each segment is mutually engaged with a second engagement formation of an adjacent second face of a neighbouring segment successively around the ring.

In a particularly convenient arrangement, mutually co-operable and engagable projections and recesses are provided such that a projection on a first face of a first press ring slots in a releasably retained manner into a complementary recess in an adjacent second face of a second press ring segment

Although it is a requirement of the invention that the assembled press ring structure must be rigidly formed and rigidly retained on the barrel when fixed in situ, and preferably lockably retained thereon, it is not a requirement of the invention that any such locking mechanism is necessarily provided between the annular segments themselves so long as they lock suitably in place in situ on the barrel.

Each press ring, when assembled, and each press ring segment, is thus adapted to be mountable on a barrel, for example by releasable mechanical fixing formations associated with the press ring and/or barrel and or discretely provided, so as to be releasably lockable thereon for use.

Each press ring, and each press ring segment, has at least one through aperture configured to seat on a projection on the barrel in use and/or to receive a through fixing member to attach the press ring to the barrel in use.

In a more complete aspect of the invention, an assemblable and dissassemblable press consolidator roller comprises a plurality of press ring structures each comprising a plurality of annular segments in accordance with the first aspect of the invention; a barrel; and mechanical fixing formations to releasably fix assembled press rings to the barrel.

The mechanical fixing formations may be provided as separate structures cooperating with the press rings and the barrel to attach the former to the latter and/or may be integrally formed with ring segments and/or may be integrally formed with the barrel.

The mechanical fixing formations preferably comprise a means to lock each annular press ring releasably in situ on the barrel surface in such a manner that it is rigidly mechanically engaged thereto for use.

Suitable mechanical fixing formations include the following:
complementary projections/recesses to locate a ring or ring segment on the outer surface of the barrel;
through apertures in a ring and ring segment to receive a projection extending radially outwardly from the barrel;
through apertures in a ring or ring segment to receive a separate fixing structure whereby the ring or ring segment may be engaged on to the barrel.

Fixing formations in accordance with this aspect of the invention may include locking structures, for example being threaded, and for example comprising combinations of nuts/bolts and like threaded connectors which may be in suitable combination integrally formed with and/or separate from the barrel or ring segments.

It is the key to the invention that regardless of the precise mechanism chosen for such fixing formations, they fix the assembled annular press rings in situ on the barrel in mechanically rigid manner for use, but in a manner which is releasable to allow the subsequent removal of the press ring structures. The provision of such mechanical fixings may obviate the need for any welded joint, and thus simplify removal, for repair and replacement for example. Typically, after a few years when the press ring structures have suffered excessive wear, the fixing formations may be released allowing the rings to be removed and replaced with ease.

In a typical arrangement, as will be familiar, a row of press ring structures is provided axially arrayed along the roller. Preferably, all of the press rings in a row are arranged to extend outwardly in parallel planes, and in particular in planes perpendicular to the axis of the roller.

Preferably, press rings are generally evenly spaced axially along the roller when so arrayed. Preferably, each press ring in a row has a similar size and profile. For example the press ring structures are identical and evenly spaced when so arrayed.

The barrel is adapted to receive a plurality of mounted press ring structures so axially arrayed along at least a substantial part of its length for example by being adapted by provision of or to co-operate with suitable fixing formations as above described.

The press ring structures are conveniently spaced along the roller to project in such manner as to leave gaps therebetween, such that in use both the press ring structures and the circumferential surface of the barrel together make up the consolidation surface. This ensures consolidation across the whole width of the roller, whilst at the same time ensuring that a ridged structure is maintained.

In this way, the press rings create furrows in generally conventional manner. However, since the soil at the ridges contacts the barrel surface it also gets consolidated. This gives a mirror finish to the entire packed surface which offers more resistance to wind erosion and capping. The barrel acts as a positive depth control effective in a range of substrate conditions, since the ridged portions can only sink to the level of the roller surface. Excessively deep ridges are prevented. Thus the apparently contradictory benefits of the barrel systems and ring systems can be combined, and many of the disadvantages of ring systems overcome, in admirably simple manner.

For optimum effectiveness, the spacing between adjacent press ring structures should be of the same general order of magnitude as the width of press ring structures at their widest point, with a clear space of for example 0.5 to 3 press-ring structure widths being left between each adjacent press ring structure. Preferably, press ring structures are provided along the entire length of the barrel or a substantial part thereof.

An example of such a press consolidator for consolidation of a particulate substrate such as soil is described in WO2004/047515. The present invention is particularly applicable to, though not limited in application to, press consolidator rollers of the type described therein, which may be considered incorporated herein by reference.

The preferred diameter of the cylindrical barrel structure and detailed dimensions of the press ring projections might be varied for different intended substrate conditions. However, it is a virtue of the present invention that a single basic design will be widely applicable to a range of conditions. Preferably, the barrel will be up to 1000 mm in diameter and for example between 400 and 700 mm in diameter, therefore giving optimum performance in a range of substrate conditions, and in particular providing a large rolling circumference to prevent bulldozing in light sandy soil conditions.

As an alternative to simply altering the size of the barrel, means may be provided to alter the downward pressure it exerts for different conditions. In particular, means may be provided to increase the weight of the barrel where a more aggressive rolling action is required. Conveniently, the barrel is at least partly hollow, providing a reservoir therewithin for the addition and removal of ballast weight to effect this, most simply by filling with a liquid such as water.

In this way, in heavy soil conditions the press consolidator can have its weight increased by filling the barrel with water giving a much more aggressive crushing rolling action as necessary.

This aspect of the invention encompasses the above mentioned segmented annual press ring structures and /or barrel and/or integral or separate fixing formations in any combination for example as a kit of parts. This aspect of the invention additionally comprises a press consolidator roller assembled from such a combination of annular segments and barrel and integral or separate fixing formations.

In a further aspect the invention additionally comprises a barrel configured for use with mountable segmented press ring structures in accordance with the first aspect of the invention, in particular in that the outer surface of the barrel is specifically adapted to locate and/or mount press rings in accordance with the first aspect of the invention upon it. For example the barrel is provided with projections, recesses, fixing projections or apertures to receive fixing means that are complementary to those provided on or provided with the press ring segments in accordance with the first aspect of the invention.

In a further aspect of the invention, a press consolidation system comprises a chassis having mountable thereon at least one press consolidator assembly (i. e. at least one roller comprising a cylindrical barrel and mounted projecting press ring structures) as above described. A plurality of press consolidators as above described may be serially mounted in train upon such a chassis so as to act sequentially on the soil or other substrate when drawn thereacross. Other cultivation units having other functionality may be serially mounted in train on the chassis with the one or more press consolidator roller assemblies to provide other sequential functionalities as the whole chassis assembly is drawn across a substrate. For example, primary or secondary cultivators or the like may be provided.

Each press consolidator assembly is preferably mounted on a pair of bearings on the chassis, enabling the entire roller to revolve freely.

The press consolidator system is drawn across the substrate in use. This might be effected in that the chassis may comprise an integral vehicle provided with drive means to enable it to be driven across a surface to be consolidated and/or in that the chassis may comprise part of a trailer structure to enable it to be towed there across. In particular, the chassis comprises a trailer structure, with means provided to engage a forward part thereof with the towing apparatus of a suitable towing vehicle, such as a tractor or the like. Road wheels may be provided on such a trailer deployable from a road engaging position whereat the press consolidator and any other assemblies upon the chassis are lifted above the surface for road use, and a stowed configuration whereat the wheels are out of the way allowing the press consolidator and any other assemblies upon the chassis are in position to engage the surface of the substrate to be consolidated.

The press consolidator assembly can be fitted and retrofitted into a wide range of primary/secondary cultivation machines, this will allow for pressing and firming to a higher quality with a lower power requirement than any current land press.

Although the invention is discussed in the context of cultivation, it can be applied wherever substrate levelling with conditioning is required. Other uses for the press consolidator assembly may easily be envisaged. For example the consolidation maybe used in construction, for road building or road levelling or in any similar form of ground levelling or the like.

In accordance with the invention is a further aspect, a method of assembly of a press consolidator roller comprises the steps of:
assembling a plurality of annularly segmented press ring structures in accordance with the first aspect of the invention into a plurality of complete press rings;
mounting the assembled press ring structure into position on a cylindrical barrel adapted to receive them;
fixing the press ring structures into position thereon, in particular so as to releasably rigidly lock them in position.

The method of this aspect of the invention is thus a method of fitment of segmented press ring structures in accordance with the first aspect of the invention and/or a method of assembly of a roller system in accordance with the second aspect of the invention, and preferred features will be understood by analogy.

In particular, the method comprises:
providing a plurality of press ring structures adapted for mounting upon a barrel of a press consolidator roller, each comprising a plurality of annular segments mutually mechanically engagable such as to form when so engaged a complete annular press ring structure;
providing a barrel of a press consolidator roller having an outer surface adapted to locate and/or mount the said press ring structures;
assembling the plurality of annularly segmented press ring structures into a plurality of assembled press ring structures;
mounting the assembled press ring structures into position on the barrel; fixing the press ring structures into position thereon, in particular so as to releasably rigidly lock them in position.

In accordance with a further aspect of the invention, a method of repair of a press consolidator roller assembly assembled in accordance with the foregoing aspect of the invention is provided, comprising the steps of:
releasing and removing from the barrel any press ring structures that it is intended to replace;
providing replacement segmented press ring structures;
fixing these on to the barrel in accordance with the foregoing method.

The invention will now be described by way of example only with reference to the accompanying drawings in which:
Figure 1 shows a perspective view of a press consolidator roller embodying the principles of the invention in an assembled configuration;
Figure 2 shows a perspective view of a similar roller in assembled state and with press rings removed;
Figure 3 shows a perspective view of a press consolidator roller in accordance with a further embodiment of the invention in an assembled configuration;
Figures 4a and 4b show a perspective view of two alternative embodiments of annular segment in accordance with the invention;
Figures 5 and 6 show a perspective view of the assembly of annular segments onto a roller to produce a roller assembly such as that illustrated in figure 1.

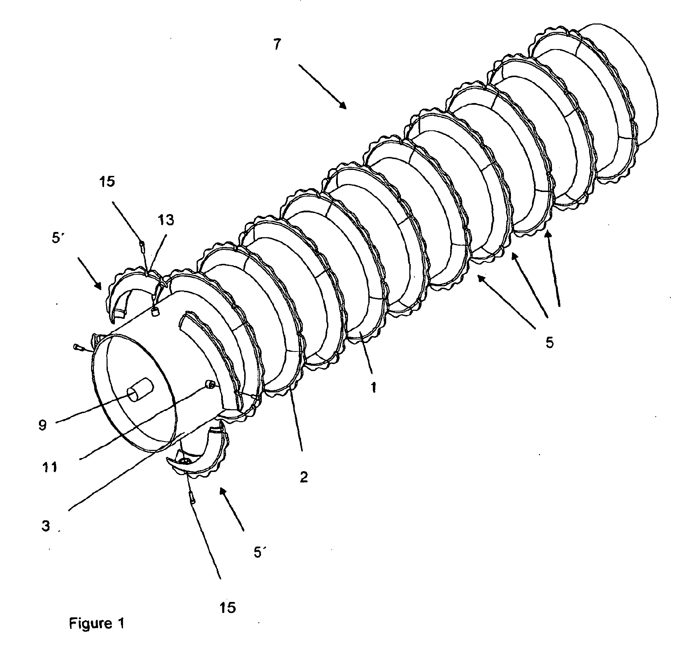

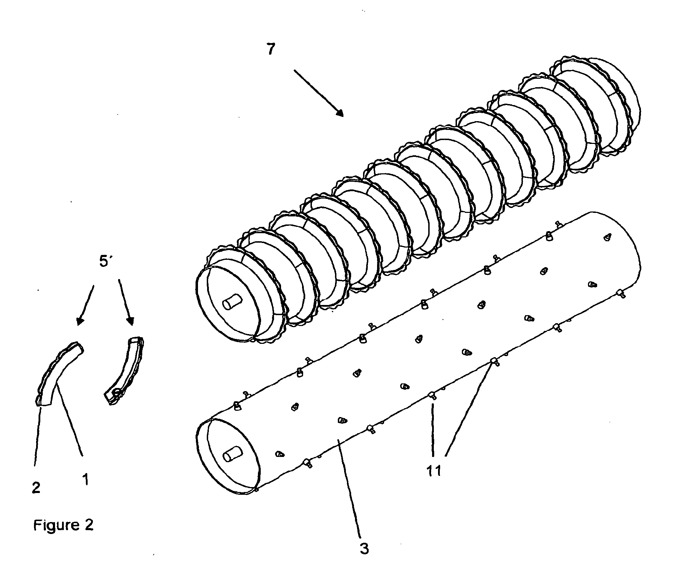

Referring to figures 1 and 2, an example press consolidator 7 is shown for use as a packer press cultivator. The assembly comprises a suitable diameter hollow steel cylinder 3 making up the barrel structure of the roller, on which are mounted in the assembled state, in regular axially spaced array, a series of modular press rings 5, making up projecting press ring structures.

A press ring in the embodiment comprises a radially extending primary central disc 2 and convex shoulder portions 1. The convex shoulder portions 1 together form a wedge shape that tapers from a wider base at the barrel to a narrower structure distal from the barrel. The convex shoulder portions 1 do not extend the full radial width of the disc 2, but are configured such that a projecting portion of the disc 2 remains projecting beyond the top of the shoulders to cut a primary channel within the consolidated soil surface.

In the illustrated embodiment the disc 2 is given a serrated edge. This serrated edge ensures bite in difficult and heavy conditions, assisting consistent rotation. A number of serrated tooth profiles will be appropriate.

Also illustrated is a mounting bearing 9 by which the roller assembly can be mounted upon a chassis for use.

Each annular press ring formation 5 is split into a number of segments (labelled as 5' when detached) which together make up an assembled whole when assembled in situ on the barrel 3.

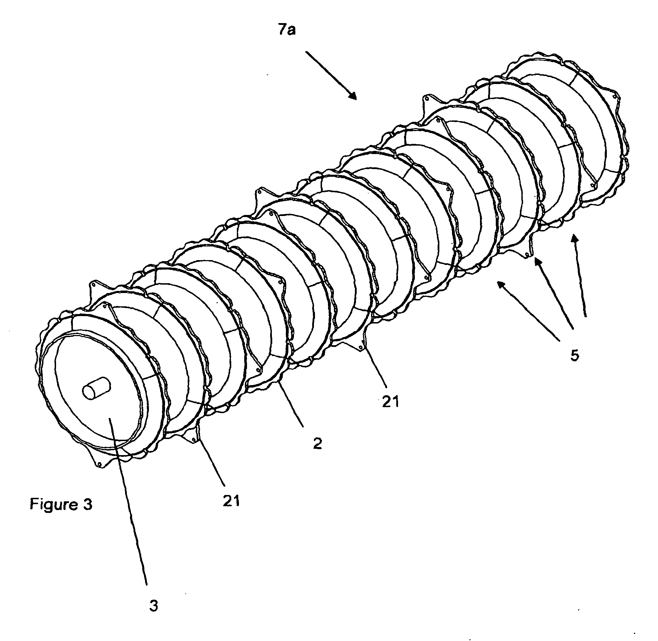

In figure 3, an alternative example press consolidator 7a is shown for use as a packer press cultivator. The assembly in the example is generally similar to that in figures 1 and 2, and where applicable like reference numerals are used for like components. In particular the assembly comprises a suitable diameter hollow steel cylinder 3 making up the barrel structure of the roller, on which are mounted in the assembled state, in regular axially spaced array, a series of modular press rings 5, making up projecting press ring structures.

The embodiment differs in that each press ring structure is provided with a drive lug 21 which extends substantially beyond the otherwise regular serrated edge profile of the annular disc 2. This radially extending drive lug has the effect of increasing the overall diameter of the assembled packer ring, creating extra drive to keep the roller-turning in all soil types and conditions.

One or more such lugs may be provided in an assembled packer ring, and where multiple lugs are provided these are conveniently evenly arrayed around the system. For example, in a convenient embodiment, one, some or all of the segments may each be provided with one such drive lug. In the illustrated embodiment, where an annular formation is split into four segments, this means that drive lugs can be fitted as four per annular ring, three per ring, two per ring, one per ring or none at all depending on conditions and preferences. This gives an additional flexibility to the device which further exploits the mountable and demountable nature of the annular segments.

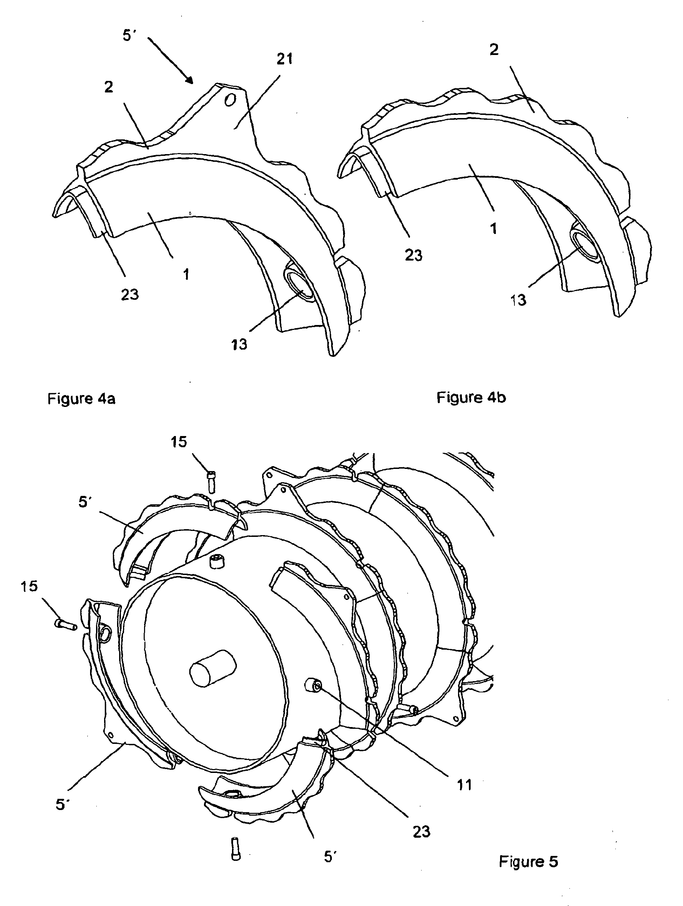

Each of the two alternative embodiments of annular segment is illustrated in greater detail in figure 4. In each case, the press ring segment 5' comprises convex shoulder portions 1 and a radial extending serrated central disc 2. The two embodiments differ in that the embodiment in figure 4a is provided with the drive lug 21 as above described, while the embodiment in figure 4b merely has a serrated edge. The segments 5' are otherwise identical and would fit together interchangeably.

In particular, this is achieved in that each segment is open underneath to define a hollow portion, and has a forward projection 23 which engages in the recess defined by the hollow portion of a further segment against which it abuts. The forward projection 23 and the corresponding hollow body of the segment against which it abuts define mutually co-operable and engagable projections and recesses. Multiple segments can thus be assembled onto a barrel. They may then be fixed in place by provision of suitable fixing means inserted through the through apertures 13.

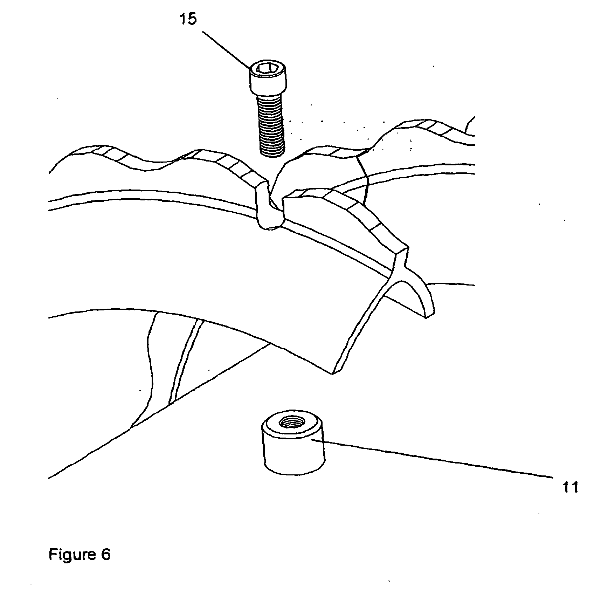

The invention is distinctly characterised by the way in which the roller assembly is assembled, and in particular the way in which the press rings are demountably attached to the barrel. This can be seen in figures 1 and 2, but is better illustrated in detail in figures 5 and 6.

Each annular press ring formation 5 is split into a number of segments (labelled as 5' when detached) which together make up an assembled whole when assembled in situ on the barrel 3.

Each of these annular segments 5' has a forward connecting portion at a forward face which slots into a suitable receiving portion in the back of the next segment In the case of the example, a forward lug 23 extends beyond the convex shoulder portions at one end of a segment and is received in and located in the recess defined by the inner walls of the next segment. Multiple segments are thus successively linked together in a ring around the barrel ready for fixing.

Each segment locates over and fixes on a dowel 11 welded to the outer surface of barrel 3. Each dowel 11 extends through a through aperture 13 extending in a radial direction (relative to the barrel) through the annular segment. This locates and fixes each annular segment making up a complete ring assembly into position on the surface of the barrel 3.

In the embodiment, the dowel 11 is provided with an internal threaded portion with which the segment is bolted down by means of the bolt 15, so that the overall assembly making up each annular ring is stably and rigidly locked into position, but can be released if desired by unscrewing of the bolt.

After a few years, when the press ring structure is showing unacceptable signs of wear, it is a simple matter to unscrew the bolts allowing the rings to be removed and replaced. There is no need to provide a welded joint between the barrel 3 and the rings 5, and consequently when the rings are to be replaced there is no requirement to remove existing welds and re-weld new rings from scratch.

The arrangement is easy to assemble and lend itself particularly to the ready replacement of individual press ring structures, when this might be required for example through wear and tear.

## Claims

1. A press ring structure for mounting upon a barrel (3) of a press consolidator roller (7, 7a) comprising a plurality of annular segments (5') mutually mechanically engagable such as to form when so engaged a complete annular press ring structure (5), and adapted to be mountable on a barrel (3) of a press consolidator roller (7, 7a) such as when so mounted to form a press ring thereon, wherein each segment is provided with a lockable and releasable engagement mechanism (15) so adapted as to allow mounting and subsequent removal of press ring structures on the barrel, **characterised in that** each segment (5') is provided with at least one through aperture (13) adapted to receive a projection (11) extending radially outwardly from the barrel in use and to attach the press ring to the barrel in use, and each segment further comprises mutually co-operable mechanical engagement formations comprising complementary projections (23) and recesses provided on or in the adjacent end faces of each pair of abutting annular segments such that in an assembled state each end face of each annular segment abuts with an adjacent end face of an adjacent annular segment in mechanically engaged manner.

2. A press ring structure in accordance claim 1 comprising at least a radially projecting press ring formation so disposed as to extend outwardly from the surface of the barrel on which it is mounted in use.

3. A press ring structure in accordance with claim 2 wherein the radially projecting formation comprises a radial blade formation (2) annularly extending around the entire extent of the ring and comprising an annular disc disposed to project perpendicularly beyond the barrel surface when mounted in situ in use.

4. A press ring structure in accordance with claim 3 wherein the radial blade formation (2) is provided with a circumferentially varying edge profile including at least one drive lug projection (23) comprising a portion of the blade formation which extends beyond the mean radial distance of the blade formation for at least the same distance again as the projecting distance between the barrel and the mean radial distance.

5. A press ring structure in accordance with one of claims 2 to 4 wherein the radially projecting press ring formation comprises a wedge formation defined by a pair of symmetrical opposed shoulder portions (1) protruding radially from the roller barrel when in situ and tapering from a wider base at the barrel to a narrower distal portion to present a generally v-shaped projecting portion when mounted in situ in use.

6. A press ring structure in accordance with claim 5 wherein the radially projecting press ring formation comprises a wedge formation proximal to the barrel and a disc formation extending outwardly beyond the wedge formation.

7. A press ring structure in accordance with any preceding claim comprising between three and six annular segments (5').

8. A press ring structure in accordance with any preceding claim wherein each press ring segment (5') making up a press ring is identical.

9. A press ring structure in accordance with any preceding claim wherein the first and second end faces of each annular segment (5') of a press ring are respectively provided with identical first and second mutually co-operable and engagable projections (23) and recesses such that in a complete assembled press ring a projection on a first face of a first press ring slots in a releasably retained manner into a complementary recess in an adjacent second face of a second press ring segment successively around the ring.

10. An assemblable and dissassemblable press consolidator roller comprising a plurality of press ring structures (5) each comprising a plurality of annular segments (5') in accordance with any preceding claim; a barrel (3) configured for use with the press ring structures in particular in that the outer surface of the barrel is provided with projections (11) complementary to the through apertures (13) provided in each press ring segment (5'); and mechanical fixing formations (15) to releasably fix assembled press rings to the barrel.

11. A roller in accordance with claim 10 wherein the barrel (3) is adapted to receive a plurality of mounted press ring structures (5) axially arrayed along its length and wherein the press ring structures are identical and evenly spaced when so arrayed.

12. A roller in accordance with any one of claims 10 or 11 wherein the barrel (3) is between 400 and 700 mm in diameter.

13. A press consolidation system comprising a chassis having mountable thereon at least one press consolidator assembly (7) comprising an assembled press consolidator roller in accordance with any one of claims 10 to 12.

14. A method of assembly of a press consolidator roller comprising the steps of:
assembling a plurality of annularly segmented press ring structures in accordance with any one of claims 1 to 9 into a plurality of complete press rings (5);
mounting the assembled press ring structures into.position on a cylindrical barrel (3) adapted to receive them;
fixing the press ring structures into position thereon, so as to releasably rigidly lock them in position.

15. A method of repair of a press consolidator roller assembly assembled in accordance with claim 14 comprising the steps of:
releasing and removing from the barrel (3) any press ring structures (5) that it is intended to replace;
providing replacement segmented press ring structures;
fixing these on to the barrel in accordance with the method of claim 14.

## Patentansprüche

1. Eine Pressringstruktur zum Montieren an einem Zylinder (3) einer Presspackerwalze (7, 7a), beinhaltend eine Vielzahl von ringförmigen Segmenten (5'), die gegenseitig mechanisch in Eingriff gebracht werden können, um so, wenn im Eingriff befindlich, eine vollständige ringförmige Pressringstruktur (5) zu bilden, und die angepasst sind, um an einem Zylinder (3) einer Presspackerwalze (7, 7a) montierbar zu sein, sodass sie, wenn so montiert, einen Pressring darauf bilden, wobei jedes Segment mit einem verriegelbaren und lösbaren Eingriffsmechanismus (15) versehen ist, der angepasst ist, um das Montieren und anschließende Entfernen von Pressringstrukturen an dem Zylinder zu ermöglichen, **dadurch gekennzeichnet, dass** jedes Segment (5') mit mindestens einer Durchgangsöffnung (13) versehen ist, die angepasst ist, um einen Vorsprung (11) aufzunehmen, der sich radial von dem im Einsatz befindlichen Zylinder nach außen erstreckt, und den Pressring an dem im Einsatz befindlichen Zylinder anzubringen, und wobei jedes Segment ferner gemeinsam zusammenwirkende mechanische Eingriffsformationen beinhaltet, die komplementäre Vorsprünge (23) und Vertiefungen beinhalten, welche auf oder in den benachbarten Stirnflächen eines jeden Paares von anstoßenden ringförmigen Segmenten vorgesehen sind, sodass im zusammengefügten Zustand jede Stirnfläche jedes ringförmigen Segments an eine benachbarte Stirnfläche eines benachbarten ringförmigen Segments in mechanisch eingreifender Weise anstößt.

2. Pressringstruktur gemäß Anspruch 1, die mindestens eine radial vorspringende Pressringformation beinhaltet, die derart angeordnet ist, um sich von der Oberfläche des Zylinders, an dem sie im Einsatz montiert ist, nach außen zu erstrecken.

3. Pressringstruktur gemäß Anspruch 2, wobei die radial vorspringende Formation eine radiale Flügelformation (2) beinhaltet, die sich ringförmig um den gesamten Umfang des Rings herum erstreckt und eine ringförmige Scheibe beinhaltet, welche derart angeordnet ist, um senkrecht über die Zylinderfläche hinaus vorzuspringen, wenn sie im Einsatz an der Stelle montiert ist.

4. Pressringstruktur gemäß Anspruch 3, wobei die radiale Flügelformation (2) mit einem im Umfang variierenden Randprofil versehen ist, das mindestens einen Antriebsansatzvorsprung (23) umfasst, der einen Abschnitt der Flügelformation beinhaltet, welcher sich über den mittleren radialen Abstand von der Flügelformation hinaus um mindestens nochmals den gleichen Abstand wie der vorspringende Abstand zwischen dem Zylinder und dem mittleren radialen Abstand erstreckt.

5. Pressringstruktur gemäß einem der Ansprüche 2 bis 4, wobei die radial vorspringende Pressringformation eine Keilformation beinhaltet, die durch ein Paar von symmetrisch gegenüberliegenden Schulterabschnitten (1) definiert ist, welche radial von dem Walzenzylinder vorstehen, wenn sie an Ort und Stelle sind und von einer breiteren Basis an dem Zylinder zu einem schmäleren distalen Abschnitt hin spitz zulaufen, um einen im Allgemeinen v-förmigen vorspringenden Abschnitt darzustellen, wenn sie im Einsatz an Ort und Stelle montiert sind.

6. Pressringstruktur gemäß Anspruch 5, wobei die radial vorspringende Pressringformation eine Keilformation, die proximal zu dem Zylinder liegt, und eine Scheibenformation, die sich über die Keilformation hinaus nach außen erstreckt, beinhaltet.

7. Pressringstruktur gemäß einem der vorhergehenden Ansprüche, die zwischen drei und sechs ringförmige Segmente (5') beinhaltet.

8. Pressringstruktur gemäß einem der vorhergehenden Ansprüche, wobei jedes Pressringsegment (5'), das einen Pressring ausmacht, identisch ist.

9. Pressringstruktur gemäß einem der vorhergehenden Ansprüche, wobei die erste und zweite Stirnfläche jedes ringförmigen Segments (5') eines Pressrings jeweils mit einem identischen ersten und zweiten gegenseitig zusammenwirkenden und eingreifbaren Vorsprung (23) bzw. einer identischen ersten und zweiten gegenseitig zusammenwirkenden und eingreifbaren Vertiefung versehen ist, sodass in einem vollständig zusammengesetzten Pressring ein Vorsprung auf einer ersten Fläche eines ersten Pressrings auf lösbare und zurückhaltende Weise in eine komplementäre Vertiefung in einer benachbarten zweiten Fläche eines zweiten Pressringsegments sukzessiv um den Ring herum eingesteckt werden kann.

10. Eine zusammenfügbare und zerlegbare Presspackerwalze, beinhaltend eine Vielzahl von Pressringstrukturen (5), die jeweils eine Vielzahl von ringförmigen Segmenten (5') gemäß einem der vorhergehenden Ansprüche beinhalten; wobei ein Zylinder (3) konfiguriert ist, um mit den Pressringstrukturen verwendet zu werden, wobei insbesondere die Außenfläche des Zylinders mit Vorsprüngen (11) versehen ist, welche mit den Durchgangsöffnungen (13) komplementär sind, die in jedem Ringsegment (5') vorgesehen sind; und mechanische Anbringungsformationen (15), um zusammengefügte Pressringe lösbar an dem Zylinder anzubringen.

11. Walze gemäß Anspruch 10, wobei der Zylinder (3) angepasst ist, um eine Vielzahl von montierten Pressringstrukturen (5) aufzunehmen, welche axial entlang seiner Länge aufgestellt sind, und wobei die Pressringstrukturen identisch sind und bei derartiger Aufstellung gleichmäßig beabstandet sind.

12. Walze gemäß einem der Ansprüche 10 oder 11, wobei der Zylinder (3) einen Durchmesser von zwischen 400 und 700 mm aufweist.

13. Ein Presspackersystem, das ein Fahrgestell beinhaltet, welches mindestens eine daran montierbare Presspackeranordnung (7) aufweist, welche eine zusammengefügte Presspackerwalze gemäß einem der Ansprüche 10 bis 12 beinhaltet.

14. Ein Verfahren zum Zusammenfügen einer Presspackerwalze, das die folgenden Schritte beinhaltet: Zusammenfügen einer Vielzahl von ringförmig segmentierten Pressringstrukturen gemäß einem der Ansprüche 1 bis 9 zu einer Vielzahl von vollständigen Pressringen (5);
Montieren der zusammengefügten Pressringstrukturen in der richtigen Position an einem zylinderförmigen Zylinder (3), der angepasst ist, um diese aufzunehmen; Anbringen der Pressringstrukturen in der richtigen Position darauf, um sie lösbar starr in der richtigen Position zu fixieren.

15. Ein Verfahren zum Reparieren einer Presspackerwalzenanordnung, die gemäß Anspruch 14 zusammengefügt ist, das die Folgenden Schritte beinhaltet:
Lösen und Entfernen jeglicher Pressringstrukturen (5) von/aus dem Zylinder (3), welche ersetzt werden sollen;
Bereitstellen von segmentierten Ersatz-Pressringstrukturen;
Anbringen dieser an dem Zylinder gemäß dem Verfahren nach Anspruch 14.

## Revendications

1. Une structure d'anneaux de presse destinée à être montée sur un cylindre (3) d'un rouleau de groupeur de presse (7, 7a) comprenant une pluralité de segments annulaires (5') pouvant se mettre en prise mécaniquement mutuellement de sorte à former lorsque mis en prise de cette manière une structure d'anneaux de presse annulaire complète (5), et conçue pour pouvoir être montée sur un cylindre (3) d'un rouleau de groupeur de presse (7, 7a) de sorte à former lorsque montée de cette manière un anneau de presse sur celui-ci, où chaque segment est doté d'un mécanisme de mise en prise verrouillable et libérable (15) conçu de manière à permettre le montage et le retrait subséquent de structures d'anneaux de presse sur le cylindre, **caractérisé en ce que** chaque segment (5') est doté d'au moins une ouverture traversante (13) conçue pour recevoir une saillie (11) s'étendant radialement vers l'extérieur à partir du cylindre lors de l'utilisation et pour attacher l'anneau de presse au cylindre lors de l'utilisation, et chaque segment comprend en outre des formations de mise en prise mécanique pouvant coopérer mutuellement comprenant des saillies complémentaires (23) et des évidements prévus sur ou dans les faces d'extrémité adjacentes de chaque paire de segments annulaires en butée de telle sorte que dans un état assemblé chaque face d'extrémité de chaque segment annulaire soit en butée contre une face d'extrémité adjacente d'un segment annulaire adjacent de manière mécaniquement mise en prise.

2. Une structure d'anneaux de presse conformément à la revendication 1 comprenant au moins une formation d'anneaux de presse radialement saillante disposée de manière à s'étendre vers l'extérieur à partir de la surface du cylindre sur lequel elle est montée lors de l'utilisation.

3. Une structure d'anneaux de presse conformément à la revendication 2 où la formation radialement saillante comprend une formation d'aubes radiales (2) s'étendant de manière annulaire autour de l'étendue entière de l'anneau et comprenant un disque annulaire disposé de façon à être perpendiculairement saillant au-delà de la surface de cylindre lorsqu'il est monté in situ lors de l'utilisation.

4. Une structure d'anneaux conformément à la revendication 3 où la formation d'aubes radiales (2) est dotée d'un profil de bord circonférentiellement variable incluant au moins une saillie de patte d'attache (23) comprenant une partie de la formation d'aubes qui s'étend au-delà de la distance radiale moyenne de la formation d'aubes sur au moins la même distance encore que la distance saillante entre le cylindre et la distance radiale moyenne.

5. Une structure d'anneaux de presse conformément à l'une des revendications 2 à 4 où la formation d'anneaux de presse radialement saillante comprend une formation de cales définie par une paire de parties d'épaulement opposées symétriques (1) radicalement protubérantes à partir du cylindre de rouleau lorsque in situ et s'effilant à partir d'une base plus large au niveau du cylindre jusqu'à une partie distale plus étroite afin de présenter une partie saillante en forme générale de V lorsque montée in situ lors de l'utilisation.

6. Une structure d'anneaux de presse conformément à la revendication 5 où la formation d'anneaux de presse radialement saillante comprend une formation de cales à proximité du cylindre et une formation de disques s'étendant vers l'extérieur au-delà de la formation de cales.

7. Une structure d'anneaux de presse conformément à n'importe quelle revendication précédente comprenant entre trois et six segments annulaires (5').

8. Une structure d'anneaux de presse conformément à n'importe quelle revendication précédente où chaque segment d'anneau de presse (5') constituant un anneau de presse est identique.

9. Une structure d'anneaux de presse conformément à n'importe quelle revendication précédente où les première et deuxième faces d'extrémité de chaque segment annulaire (5') d'un anneau de presse sont respectivement dotées de premiers et deuxièmes évidements et saillies identiques pouvant coopérer et pouvant se mettre en prise mutuellement (23) de telle sorte que dans un anneau de presse assemblé complet une saillie sur une première face d'un premier anneau de presse s'emboîte de manière retenue de façon libérable dans un évidement complémentaire dans une deuxième face adjacente d'un deuxième segment d'anneaux de presse successivement autour de l'anneau.

10. Un rouleau de groupeur de presse pouvant être assemblé et désassemblé comprenant une pluralité de structures d'anneaux de presse (5) comprenant chacune une pluralité de segments annulaires (5') conformément à n'importe quelle revendication précédente ; un cylindre (3) configuré pour une utilisation avec les structures d'anneaux de presse en particulier en ceci que la surface externe du cylindre est pourvue de saillies (11) en complément des ouvertures traversantes (13) prévues dans chaque segment d'anneau de presse (5') ; et des formations de fixation mécanique (15) pour fixer de manière libérable des anneaux de presse assemblés au cylindre.

11. Un rouleau conformément à la revendication 10 où le cylindre (3) est conçu pour recevoir une pluralité de structures d'anneaux de presse montées (5) disposés en matrice axialement sur sa longueur et où les structures d'anneaux de presse sont identiques et espacées de façon égale lorsque disposées en matrice de cette manière.

12. Un rouleau conformément à l'une quelconque des revendications 10 à 11 où le cylindre (3) fait entre 400 et 700 mm de diamètre.

13. Un système de groupage de presse comprenant un châssis sur lequel peut être monté au moins un assemblage de groupeur de presse (7) comprenant un rouleau de groupeur de presse assemblé conformément à l'une quelconque des revendications 10 à 12.

14. Un procédé d'assemblage d'un rouleau de groupeur de presse comprenant les étapes consistant à assembler une pluralité de structures d'anneaux de presse segmentés de manière annulaire conformément à l'une quelconque des revendications 1 à 9 en une pluralité d'anneaux de presse complets (5) ;
monter les structures d'anneaux de presse assemblées en position sur un cylindre cylindrique (3) conçu pour les recevoir ;
fixer les structures d'anneaux de presse en position sur celle-ci, de manière à les verrouiller de façon rigide et libérable en position.

15. Un procédé de réparation d'un assemblage de rouleau de groupeur de presse assemblé conformément à la revendication 14 comprenant les étapes consistant à :
libérer et retirer du cylindre (3) toutes structures d'anneaux de presse (5) censées être remplacées ;
fournir des structures d'anneaux de presse segmentées de remplacement ;
fixer celles-ci sur le cylindre conformément au procédé de la revendication 14.
